Europäisches Patentamt

European Patent Office

Office européen des brevets

(19)

(11) Publication number: **0 129 522**
A2

(12) # EUROPEAN PATENT APPLICATION

(21) Application number: 84850179.7

(22) Date of filing: 12.06.84

(51) Int. Cl.³: **B 60 R 25/02**

(30) Priority: 13.06.83 SE 8303348

(43) Date of publication of application:
27.12.84 Bulletin 84/52

(84) Designated Contracting States:
DE FR GB IT NL

(71) Applicant: Honkanen, Kalevi
Jan Eriks väg 25
S-74300 Storvreta(SE)

(71) Applicant: Hanson, Lars P.G.
Marielund, Funbo
S-75590 Uppsala(SE)

(71) Applicant: Janemar, Bengt E.
Luthagsesplanaden 5a
S-75225 Uppsala(SE)

(72) Inventor: Honkanen, Kalevi
Jan Eriks väg 25
S-74300 Storvreta(SE)

(72) Inventor: Hanson, Lars P.G.
Marielund, Funbo
S-75590 Uppsala(SE)

(72) Inventor: Janemar, Bengt E.
Luthagsesplanaden 5a
S-75225 Uppsala(SE)

(74) Representative: Grennberg, Erik Bertil et al,
H ALBIHNS PATENTBYRA AB Box 7664
S-103 94 Stockholm(SE)

(54) Device in steering-wheel locks.

(57) In order to prevent breaking-up of a steering-wheel lock so as to destroy the lock by exerting a torsional moment on the steering wheel, the lock pin is made to act on a securing plate (2) which is rotatably mounted on the steering column (1) but with a powerful friction due to a friction member (3). According to the invention, a friction member (3) is fitted from either end of the securing plate (2) into spaces formed between the steering column (1) and outer conical surfaces (6) at each end of the securing plate (2). The friction members (3) are correspondingly wedge-shaped, and a wedge action is achieved by an inwards bending (4) of the two securing plate ends in a hydraulic press, the compression force applied determining the amount of frictional moment.

FIG.1

EP 0 129 522 A2

## DEVICE IN STEERING-WHEEL LOCKS

The invention relates to a device in steering-wheel locks for vehicles of the kind as recited in the preamble of Claim 1.

In connection with vehicle thefts, the thief sometimes breaks up the steering-wheel lock simply by exerting a sufficiently strong torsional moment on the steering wheel, with the aid of a lever for example, for the lock to break apart, generally by the lock pin being ruptured. With regard inter alia to lack of space, it is difficult to achieve locks which do not burst when exposed to a torque of 200 Nm for example. The solution chosen to overcome this problem has therefore been an arrangement of the above-mentioned type by means of which a powerful torsional moment exerted on the steering wheel results in that the steering column will turn irrespective of the lock which is still undamaged, and consequently the car cannot be driven.

With the known solution of the kind mentioned in the introduction there is provided between the steering column and the securing plate a cylindrical annular gap into which an annular friction member is fitted. This friction member consists of a sheet metal layer pressed into wave configurations with the outwardly directed wave tops in abutting contact with the inner cylindrical surface of the securing plate and the inwardly directed wave tops in abutting contact with the cylindrical surface of the steering column. Due to the suitable dimensioning of the two cylinder diameters in relation to the top-to-top dimension of the sheet metal, the frictional moment can in principle be quite accurately determined. The demands on tolerance are however very high amounting many times to the order of 5 µm, which makes this construction relatively costly.

One object of the invention is to find a less expensive solution to the problem. Another object is to eliminate the high demands on manufacturing tolerances associated with the known solution. A further object is to obtain a device of the kind in question by which the frictional moment can easily be set at manufacture.

These and other objects and advantages are achieved according to the invention by means of the specific features disclosed in the characterizing clause of Claim 1.

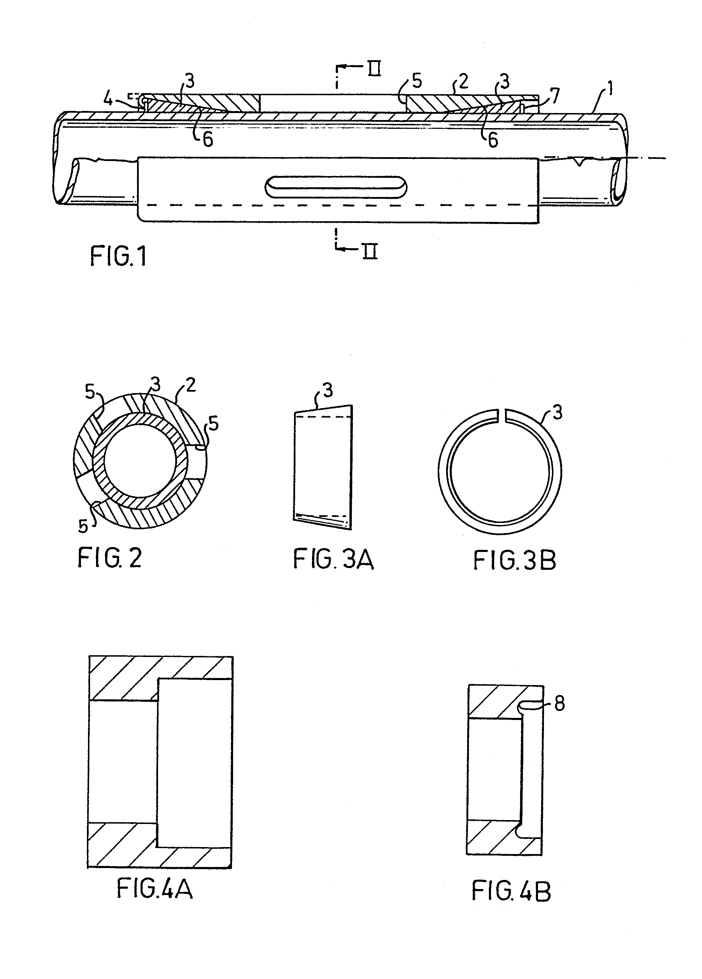

The invention will now be explained in more detail on the basis of a non-limiting exemplary embodiment. Fig. 1 is a partly cut-away side view of an exemplary embodiment. Fig. 2 is a cross section according to A-A in Fig. 1. Figs. 3A and 3B illustrate a friction member. Figs. 4A and 4B illustrate a press tool for manufacturing the exemplary embodiment.

Fig. 1 shows a partly cut-away example illustrating a steering column 1, of which only a portion is indicated, enclosed by a tubular securing plate 2 provided with three axial, radially distributed grooves or slits 5 intended during locking to receive a lock pin (not shown) for a steering-wheel lock. The slits are best illustrated by the cut section shown in Fig. 2.

The securing plate 2 is substantially tubular with an inner diameter widening out in wedge-shape at its ends into conical surfaces 6, the outer ends being relatively thin such as 2 mm in the present example as compared to 7.5 mm at the center portion of the tube. In the example, the tube has been turned out from a blank of steel quality SIS 1232. It is also possible to achieve this shape with the aid of conventional methods by plastic deformation, possibly followed by heat treatment if required.

In the wedge-shaped annular space formed between the steering column 1 and the ends of the securing plate 2 there are inserted friction members shown in side view in Fig. 3A and in end view in Fig. 3B. In this example, the conical angle was $8^\circ$ for half the conical angle of both the securing plate and the friction member. The friction member was manufactured from conventional brake lining material, and because of its flat condition the starting material was rolled while forming a small axial gap. The friction members were fitted into their wedge-shaped spaces, followed by metal rings 7, whereafter the free end edges (7 mm long) of the securing plate were inwardly bent. This was done by using press tools according to Figs. 4A and 4B, whereby the tool according to Fig. 4B was inserted in the tool according to Fig. 4A, and two such sets were attached from either side and then compressed in a hydraulic press thereby deforming the ends towards the surface 8 to the concavity 4, which is shown only to the left in Fig. 1. During the hydraulic pressure operation, the clamping force and the frictional moment could be checked by turning the steering wheel with the aid of a dynamometric wrench. In the illustrated example, a frictional moment of 75 Nm was easily reached, to be compared with the normal breaking strength of a steering-wheel lock corresponding to 200 Nm.

In series production, the frictional moment can be measured either directly during manufacture, or a trial can be performed for determining what degree of deformation or compression would be required to obtain the desired frictional moment.

Instead of a friction member made of brake lining material a correspondingly shaped metal ring, preferably of brass, can be used. In such a case the metal ring 7 could possibly be dispensed with.

In the foregoing, the invention has been described starting from a non-restricting exemplary embodiment. It is obvious however that there is a plurality of variations within reach of anyone skilled in the art, and the intention is for such variations to fall within the scope of the following claims.

CLAIMS

1. Device in steering-wheel locks for vehicles wherein a cylindrical portion of a steering column (1) is enclosed by a substantially tubular securing plate (2) provided with one or more longitudinal grooves (5), the lock pin of the steering-wheel lock being insertable in the groove (5) from the side for locking, and wherein a friction member (3) is fitted into a gap formed between the steering column and the securing plate for achieving a mutual turn counteracting any frictional moment falling below the torsional moment exerted on the securing plate which constitutes the breaking point of the lock pin in its inserted state, characterized in that the securing plate (2) has at its ends outwardly directed inner conical surfaces (6), in that annular conical friction members (3) are fitted into the spaces formed between the cylindrical portion of the steering column and the inner conical surfaces, and in that the outermost ends of the securing plate are inwardly bent (4) and annularly pressed towards the outwardly directed ends of the conical friction members (3) exerting thereon an inwardly directed force, creating by wedge action a mutual friction between the steering column and the securing plate, the degree of which is determined by the amount of pressure applied.

2. Device as claimed in Claim 1, characterized in that the friction members (3) are made of brake lining material, and in that annular metal washers (7) are applied on the outwardly bent ends of the friction members for supporting the inwardly bent ends (4) of the securing plate (2).

3. Device as claimed in Claim 1, characterized in that the friction members are made of a deformable metal, preferably brass, whereas the steering column (1) and the securing plate (2) are made of steel.

FIG.1

FIG. 2   FIG. 3A   FIG.3B

FIG.4A   FIG. 4B